# EUROPEAN PATENT APPLICATION

(11) **EP 2 835 171 A1**
(43) Date of publication of application: **11.02.2015**
(21) Application number: 13003973.8
(22) Date of filing: 08.08.2013
(51) Int. Cl.: B01D 53/32, B01D 53/94, F01N 3/00

(54) **Method and system for the purification of exhaust gas with an electrochemical cell**

(71) Applicant: Technical University of Denmark, 2800 Kgs. Lyngby (DK)
(72) Inventor: Hansen, Kent Kammer, 3650 Ølstykke (DK); Mogensen, Mogens, 3540 Lynge (DK); Shao, Jing, 4000 Roskilde (DK)
(74) Representative: Høiberg A/S

(57) **Abstract**

The present invention relates to a method for electrochemical reduction of nitrogen oxides and concomitant oxidation of soot, as well as systems useful therefor. Such methods and systems in particular are useful in the context of exhaust gas purification, in particular for diesel engines.

## Description

### Field of Invention

The present invention relates to a method for purification of exhaust gas involving the electrochemical reduction of nitrogen oxides to nitrogen, as well as a system useful therefor.

### Background

In recent years, particulates and gaseous species, such as nitrogen oxides, for example contained in exhaust gases of automobiles or diesel engines, have raised serious problems as environmental contaminants. For this reason, filters and gas converters have been proposed, which allow exhaust gases to pass through a chemical or electrochemical reactor, so that the exhaust gas is purified, by means of filtration or conversion.

WO 2007/125394 discloses an exhaust gas purification system and a method for purifying exhaust gas. The system is **characterized in that** it employs an electrochemical purification apparatus, where on the cathode side exhaust gas, including nitrogen oxides, is purified in particular by reducing nitrogen oxides to nitrogen. This system, however, requires a hydrogen gas generator in order to provide hydrogen-rich gas to the anode side of the electrochemical purification apparatus in order to provide the overall required oxidation reaction.

EP 2063481 relates to an electrochemical device and exhaust gas purification apparatus. It comprises an anode and a cathode with an electrolyte layer provided there between. The electrolyte layer comprises alternating layers or two types of electrolytes formed in the shape of plates, being alternating a proton conductor and an oxygen ion conductor. The exhaust gas purification apparatus disclosed in EP 2063481 comprises high numbers of such electrochemical device where at the anode carbon is converted to carbon dioxide while nitrogen oxides are converted to nitrogen at the cathode. Essential for the performance of these devices is the presence of precious metals on the cathode, including platinum coated supports as well as rhodium containing materials.

EP 223732 describes an exhaust gas purification system comprising an electrochemical reactor. The reactor includes an electrochemical cell comprising a cathode, an anode and a polyelectrolyte membrane located there between.

US 2006/0118409 discloses a chemical reaction system for efficiently excluding nitrogen oxides when excess oxygen is present in exhaust gases. This document discloses an electrochemical cell including a working electrode layer, a cathode and an ion conduction phase together with an anode. Nitrogen oxides contained in the flue gas are brought into contact with the cathode side of the disclosed electrochemical cell in order to provide reduction to nitrogen.

Other prior art techniques for the removal of nitrogen oxides from exhaust gases employ external chemical reducing agents, such as urea-derived agents.

The prior art systems and methods for purifying exhaust gases, in particular for removing nitrogen oxides, however, still suffer from drawbacks in that either additional external reducing agents are required, or other external agents such as hydrogen-rich gas exemplified in the prior art cited above. Most of the techniques furthermore require the presence of precious metals, such as platinum which increases costs and does not show much promise for the feature in view of scarce resources for such precious metals (combined with the problems of recycling such precious metals from exhaust gas purification systems). In addition, activity of electrochemical exhaust gas purification systems in the prior art often is not yet fully satisfactory so that further improvements are required.

### Objects of the Present Invention

In view of the difficulties and drawbacks associated with the prior art systems discussed above, it was the object of the present invention to provide an effective method for purifying exhaust gases, in particular for reducing nitrogen oxides to nitrogen. It furthermore was an object of the present inventors to provide a method which enables the use of materials which can be produced reliably and stably at low cost, thereby avoiding the use of precious metals.

Furthermore, the inventors aimed at providing a method and system for exhaust gas purification with a high activity which furthermore allows a simple construction of exhaust gas purification systems.

Finally, it was also an object of the present inventors to provide a method and a system for exhaust gas purification, which allows a simultaneous purification of the exhaust gas with respect to nitrogen oxides but also with respect to carbon pollutants contained in exhaust gas.

### Summary of the Invention

In order to solve the above objects, i.e. at least one of the objects exemplified above, the inventors have proposed the method for purification of exhaust gas as identified in claim 1. Preferred embodiments are described in subclaims 2 to 8 as well as in the following description. The inventors furthermore provide a system for purification of exhaust gas, which is in particular suitable for carrying out the method of the present invention. This system is described in claim 9. Preferred embodiments thereof are described in claims 10 to 15 as well as in the following description.

### Brief Description of the Figures

Figure 1 shows a schematic view of an exhaust gas purification system in accordance with the present invention.
Figure 2 shows a system in accordance with the present invention where simultaneously nitrogen oxides as well as carbon pollutants are purified.
Figure 3 shows the temperature dependency of the NOₓ conversion of test gases (A) and (B).
Figure 4 shows the temperature dependency of the current efficiency of test gases (A) and (B).
Figure 5 shows the voltage dependency on the NOₓ conversion and current efficiency of test gases (A) and (B).
Figure 6 shows the frequency dependency on the NOₓ conversion and the current efficiency of test gas (A) at 400 °C.
Figure 7 shows the frequency dependency on the NOₓ conversion and the current efficiency of test gas (B) at 400 °C.

### Detailed Description of the Invention

In the following, a detailed description of the present invention is provided, mainly focusing on the method in accordance with the present invention. All preferred embodiments disclosed in the context of the method in accordance with the present invention relate to materials and systems to be employed in accordance with the method of the present invention are likewise also applicable for the system in accordance with the present invention, which will also be described below.

The method for purification of exhaust gas is conducted in a system, comprising an electrochemical cell, wherein the electrochemical cell comprises a porous ceramic anode layer, a porous ceramic electrolyte layer and a porous ceramic cathode layer, in this order. The method comprises the steps of passing the exhaust gas through the porous ceramic anode layer in order to oxidize nitrogen monoxide to nitrogen dioxide; and subsequently passing the exhaust gas through the porous ceramic cathode layer in order to reduce nitrogen dioxide to nitrogen.

The porous ceramic cathode layer comprises an alkaline or alkaline-earth oxide or a mixture thereof, preferably an alkaline-earth oxide. In a particularly preferred embodiment, the porous ceramic cathode layer comprises BaO. The alkaline or alkaline-earth oxide is an essential component for the electrochemical reduction of nitrogen dioxide to nitrogen since it ensures nitrogen dioxide storage on the cathode.

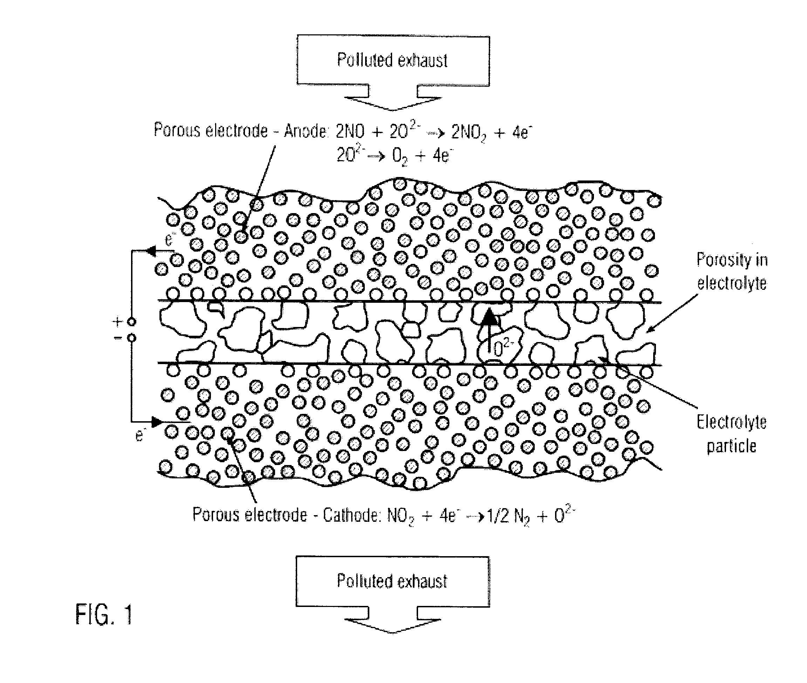

More specifically, the method in accordance with the present invention is **characterized in that** nitrogen monoxide is first oxidized to nitrogen dioxide at the anode side of the electrochemical exhaust gas purification system, followed by electrochemical reduction of nitrogen dioxide to nitrogen at the cathode side of the system. The inventors of the present application thereby make use of the finding that the activity of the electrochemical reduction of nitrogen dioxide to nitrogen is much higher than the activity of the electrochemical reduction of nitrogen monoxide to nitrogen. By ensuring that nitrogen monoxide is first oxidized to nitrogen dioxide, the present invention provides an improvement in a method for exhaust gas purification in that overall activity and efficiency can be improved. This gist of the present invention is schematically shown in Figure 1, where the anode side of an electrochemical system, nitrogen monoxide is oxidized to nitrogen dioxide. On the cathode side, the reduction of nitrogen dioxide to nitrogen occurs so that an overall purification is achieved.

The term "nitrogen oxides" in accordance with the present invention refers to NOₓ, which is a generic term for a mixture comprising nitrogen oxides, such as NO and NO₂. NOₓ is generally produced from the reaction of nitrogen and oxygen gases in the air during combustion, especially at high temperatures.

Accordingly, the present invention provides a method for the electrochemical reduction of nitrogen oxides, which comprises the steps of bringing the exhaust gas into contact with an anode of an electrochemical cell, where nitrogen monoxide is oxidized to nitrogen dioxide. Thereafter, the exhaust gas is brought into contact with a cathode of an electrochemical cell where reduction of the nitrogen dioxide to nitrogen is carried out. The electrochemical reduction may be performed in a net oxidizing atmosphere, such as in the presence of oxygen. The method is carried out using an overall porous cell structure, comprising a porous ceramic anode layer, a porous ceramic electrolyte layer and a porous ceramic cathode layer, provided in this order, so that the exhaust gas can be reliably brought into contact with the anode first, followed by a passing through of the exhaust gas through the porous anode as well as through the porous electrolyte to the porous cathode, so that the anode reaction as well as the cathode reaction as described above can be carried out.

The materials for the electrodes as well as for the electrolyte are selected among ceramic-based materials. The pure ceramic nature of the electrochemical cell enables to form a porous cell structure in an easy, reliable and cost efficient way.

In particular, the electrochemical cell is substantially free of noble metals. In embodiments, "substantially free" means that the overall content of noble metals in each of the layers is 0.1 wt% or less, preferably 0.01 wt% or less, more preferably 0.001 wt% or less.

In accordance with the method of the present invention, it is also preferred that the exhaust gas to be purified is first brought into contact an adsorption layer, which increases the adsorption of nitrogen oxide to be purified. It is again preferred that the material for the adsorption layer is based on ceramic materials.

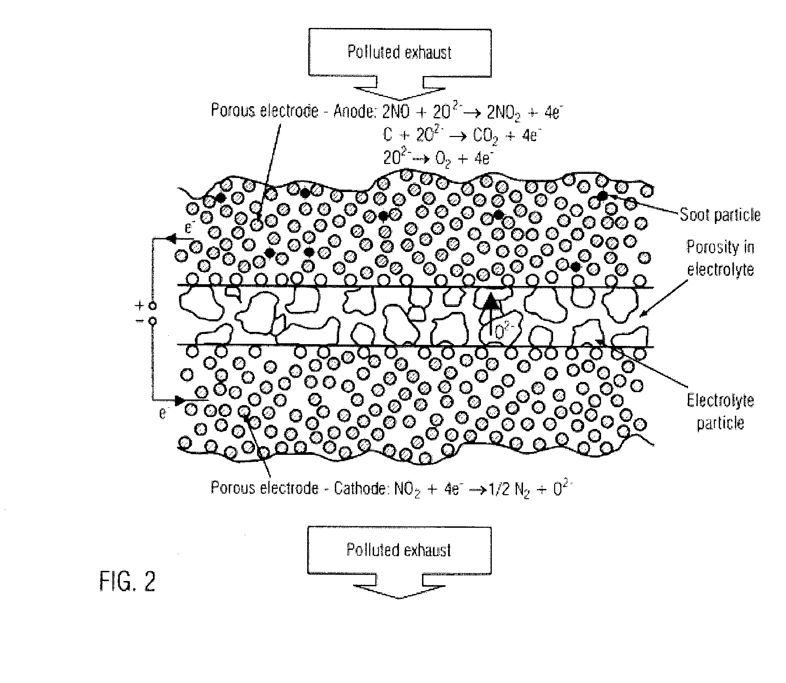

In a further preferred embodiment in accordance with the present invention, the anode is selected so that, in addition to the oxidation of nitrogen monoxide to nitrogen dioxide, an electrochemical oxidation of carbon pollutants to carbon dioxide can be carried out. Accordingly, a preferred method in accordance with the present invention comprises in addition to the electrochemical oxidation of nitrogen monomer on the anode side of the electrochemical cell, a simultaneous oxidation of carbon to carbon dioxide on the anode side of the electrochemical cell. Since the overall structure of the electrochemical cell is porous, the oxidized carbon pollutants, i.e. carbon dioxide, passes together with the exhaust gas through the anode, through the electrolyte, as well as through the cathode to the exhaust gas exit side of the exhaust gas purification system in accordance with the present invention, as depicted in Figure 2.

The method in accordance with the present invention may be employed for exhaust gas purification systems, in particular systems employed in the automotive industry, but also in other fields, such as industrial exhaust gases, exhaust gases from ship engines as well as exhaust gases from private houses (single house heating systems etc.). In view of the fact that the method in accordance with the present invention also allows a simultaneous purification of carbon derived pollutants (soot) in addition to the purification with respect to nitrogen oxides, the method in accordance with the present invention may in particular be employed in the context of exhaust gas purification of diesel engines.

Due to the fact that the method in accordance with the present invention is carried out using porous ceramic materials, which can be produced at low cost and even for large size exhaust gas purification systems (taking furthermore into account that such ceramic materials are often able to withstand high temperatures and high exhaust gas velocities), the method in accordance with the present invention is also suitable for the purification of industrial exhaust gases, where often high volumes of exhaust gas need to be purified in short time. However, specifically due to the increasing demand of European legislation in the automotive industry, the method in accordance with the present invention is most suitable for application in the automotive sector. The method in accordance with the present invention enables the use of cheap materials, does not require the presence of noble or precious metals, has a rather low space requirement, and provides high effective purification (together with low fuel penalty in embodiments). Thus, an overall superior method system for exhaust gas purification in the automotive sector is provided by the present invention.

The present invention also provides a system for purification of exhaust gas, comprising a porous ceramic anode, a porous ceramic electrolyte layer and a porous ceramic cathode, in this order. As explained above in connection with the method in accordance with the present invention, the overall porous structure of these essential constituents of an electrochemical cell enables a highly efficient, reliable and low-cost exhaust gas purification.

Suitable materials for the electrodes as well as the electrolyte are described in the following.

The electrolyte material is a porous ceramic-based material and, in embodiments, the material for the electrolyte layer includes optionally doped zirconia, such as yttria-stabilized zirconia, doped ceria, LaGaO₃ based materials or Bi₂O₃ based materials, i.e. materials which are known to the average skilled person. Such materials may also be mixed with additional components, such as various oxides and mixtures thereof. Examples of suitable oxides are oxides based on aluminum, titanium, chromium, scandium, vanadium, tantalum, manganese, niobium, strontium, calcium, manganese, bismuth, lanthan, as well as mixed oxides such as MgTiO₃, CaAl₂O₄, LaAlO₃, YbCrO₃, ErCrO₄, NiTiO₃, NiCr₂O₄ etc.

In any case, the materials selected for the electrolyte layer is required to enable oxygen ion conductivity required for the method in accordance with the present invention, i.e. the electrolyte material has to provide the required transport of oxygen ions generated at the anode side to the cathode side in order to enable the respective electrode reactions.

Materials for the electrodes, i.e. the anode and cathode, respectively, may be selected among suitable porous ceramic materials known to the average skilled person. These materials enable the provision of a method for exhaust gas purification as well as a system for exhaust gas purification free of expensive precious metals. Suitable examples of porous ceramic materials for the electrode layers are again oxide-based ceramic materials, e.g. optionally doped zirconia, such as yttria-stabilized zirconia in combination with nickel oxide, as well as doped ceria and other doped zirconia materials as well as mixed oxides of various types which are known to the average skilled person in the field of ceramics. Preferred, however, are ceramic materials such as yttria-stabilized zirconia, which may be mixed/doped with other metals or metal oxides, such as nickel oxide.

A preferred example of a combination of materials for the electrochemical cell forming the central component for the exhaust gas purification system in accordance with the present invention is a structure where both electrode layers as well as the electrolyte layer are formed on the basis of yttria-stabilized zirconia or doped ceria, with yttria-stabilized zirconia being preferred. In this embodiment, the anode may comprise yttria-stabilized zirconia as the main component. The cathode layer may preferably comprise yttria-stabilized zirconia as main component with a small amount of nickel oxide contained as dopant. In a further embodiment, the materials for the cathode and the anode are identical.

In accordance with the present invention, the materials for the anode layer, the electrolyte layer as well as the cathode layer have to be selected so that they provide the required functionality, namely oxygen ion conductivity for the electrolyte layer, suitability for the anode reaction for the anode layer and suitability for the cathode reaction for the cathode layer. Furthermore, the materials are selected so that an overall porous structure is formed, by product methods known to the average skilled person, in order to provide the overall porous system in accordance with the present invention.

### Examples

An electrochemical cell in accordance with the present invention is produced by screen printing method. The cell structure of the electrochemical cell encompasses a porous ceramic LSM15/CGO10 cathode and LSM15/CGO10 anode (the thickness of the anode/cathode is 45 µm, respectively), which are infiltrated with 1-2 wt% BaO on both sides of a dense ceramic CGO10 electrolyte layer (thickness: 300 µm).

Electrochemical reduction tests are conducted with this cell by employing two test gases, namely test gas (A) comprising 1,000 ppm NO₂ + 8 vol.% O₂, and test gas (B) comprising 1,000 ppm NO + 8 vol.% O₂. The main component of the test gases (A) and (B) is Ar. The flow rate through the porous electrochemical cell in all electrochemical reduction tests is 2 L/h. The polarizations in the tests are: (1) both negative and positive DC voltage from 1.25 to 2.5 V, or (2) square wave polarization in a frequency range of 0.008 to 1 Hz with a fixed amplitude of 2.25 V (± 2.25 V).

### Temperature dependency of the NOₓ conversion:

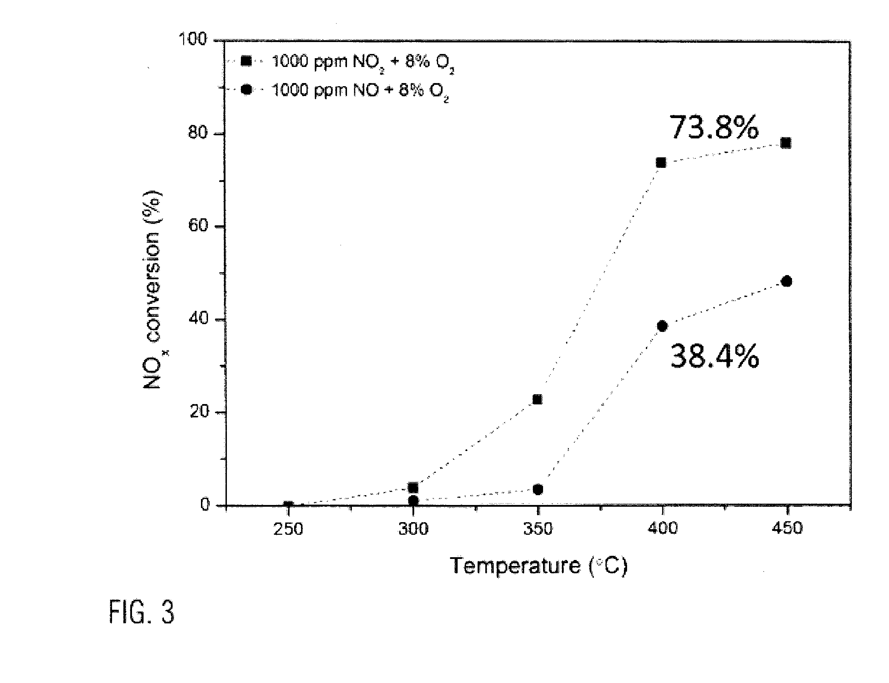

Figure 3 shows the temperature dependency of the NOₓ conversion (in vol.%) at temperatures between 250 to 450°C at a voltage of 2.25 V by employing test gases (A) and (B). Said figure illustrates that the electrochemical cell shows a much faster reduction of nitrogen dioxide to nitrogen than the reduction of nitrogen monoxide to nitrogen. For instance, the increase in the NOₓ conversion at 400 °C was approximately 90%.

### Temperature dependency of the current efficiency:

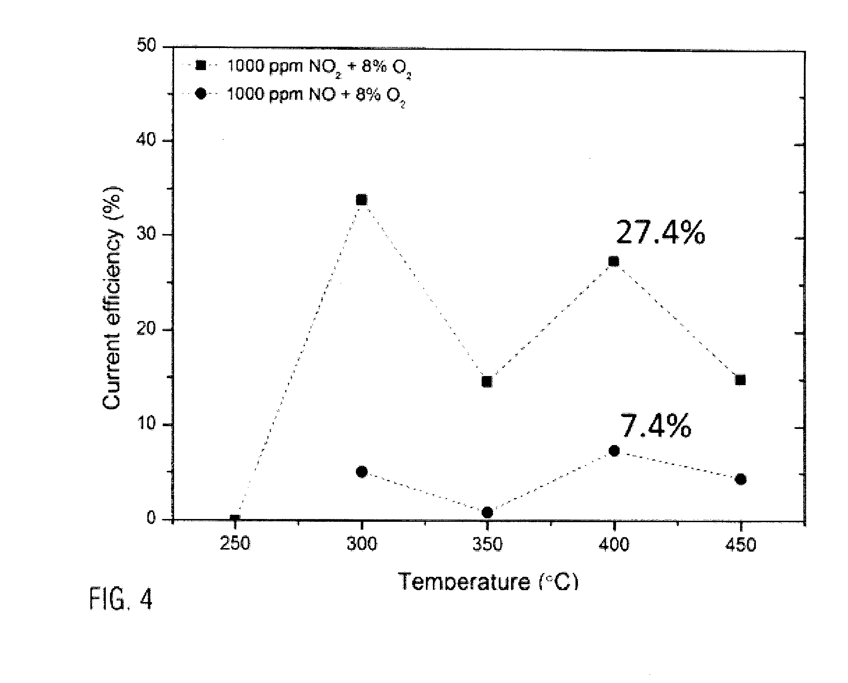

Figure 4 shows the temperature dependency of the current efficiency (in %) within a temperature range of 250-450°C, illustrating that the current efficiency is clearly improved by using test gas (A) instead of test gas (B). At 400 °C, the current efficiency increases by approximately 270%.

### Voltage dependency of the NOₓ conversion and the current efficiency:

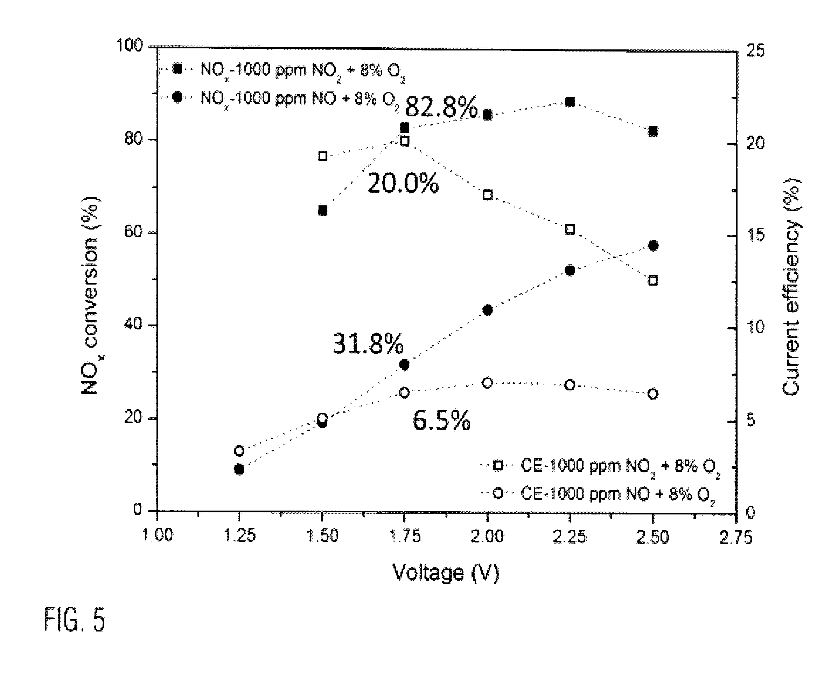

Figure 5 shows test results concerning the voltage dependency of the NOₓ conversion and the current efficiency of test gases (A) and (B) with polarization (1). As illustrated in Figure 5, the NOₓ purification properties of the electrochemical cell are significantly improved, when employing the NO₂ containing test gas (A), when compared to the NO containing test gas (B) at all tested voltages, especially at voltages of lower than 2 V.

### Frequency dependency of the NOₓ conversion:

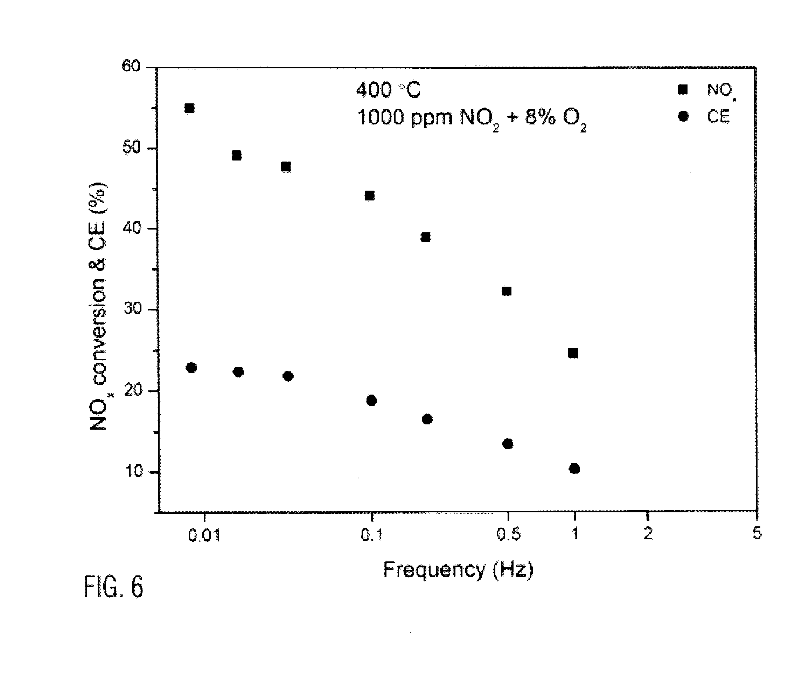

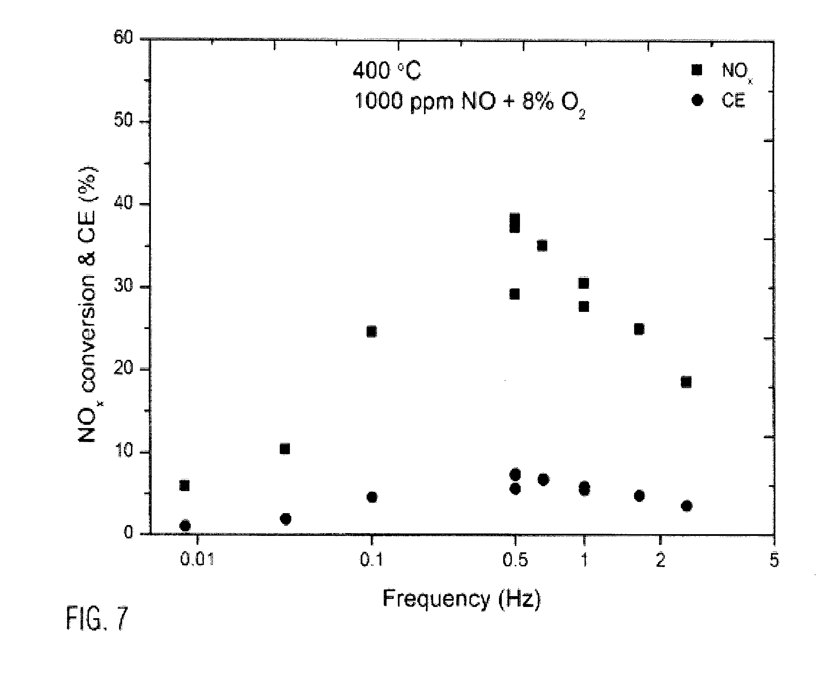

The frequency dependency is analyzed for the NOₓ conversion at a temperature of 400 °C with polarization (2). Figures 6 and 7 illustrate the results for test gases (A) and (B), respectively, clearly showing improved test results for test gas (A) at all measured frequencies.

## Claims

1. Method for purification of exhaust gas in a system, comprising an electrochemical cell, wherein the electrochemical cell comprises a porous ceramic anode layer, a porous ceramic electrolyte layer and a porous ceramic cathode layer, in this order, wherein the porous ceramic cathode layer comprises an alkaline or alkaline-earth oxide or a mixture thereof, and wherein the method comprises the following steps:
passing the exhaust gas through the porous ceramic anode layer in order to oxidize nitrogen monoxide to nitrogen dioxide; and
subsequently passing the exhaust gas through the porous ceramic cathode layer in order to reduce nitrogen dioxide to nitrogen.

2. Method in accordance with claim 1, wherein the electrochemical cell is substantially free of noble metals.

3. Method in accordance with claim 1 or 2, wherein the purification of exhaust gas is carried out in a net oxidizing atmosphere, preferably in the presence of oxygen gas.

4. Method in accordance with any one of claims 1 to 3, wherein, in addition to the exhaust gas purification with respect to nitrogen oxides, carbon pollutants are oxidized at the anode side of the electrochemical cells to carbon dioxide.

5. Method in accordance with any one of claims 1 to 4, wherein the material of the porous ceramic electrolyte layer is selected among optionally doped zirconia, such as yttria-stabilized zirconia, doped ceria, LaGaO₃ based materials or Bi₂O₃ based materials.

6. Method in accordance with any one of claims 1 to 5, wherein the material of the porous ceramic anode layer is selected among oxide-based ceramic materials.

7. Method in accordance with claim 7, wherein oxide-based ceramic material is selected from optionally doped zirconia, such as doped yttria-stabilized zirconia, or doped ceria.

8. Method in accordance with any one of claims 1 to 6, wherein the material of the porous ceramic cathode layer is selected among optionally doped zirconia, such as yttria-stabilized zirconia, or doped ceria.

9. System suitable for purification of exhaust gas, comprising an electrochemical cell comprising a porous ceramic anode layer, a porous ceramic electrolyte layer and a porous ceramic cathode layer, in this order, wherein the porous ceramic cathode layer comprises an alkaline or alkaline-earth oxide or a mixture thereof.

10. System in accordance with claim 9, wherein the electrochemical cell is substantially free of noble metals.

11. System in accordance claim 9 to 10, wherein the material of the porous ceramic cathode layer is selected among oxide-based ceramic materials.

12. System in accordance claim 11, wherein the oxide-based ceramic material is selected among optionally doped zirconia, such as yttria-stabilized zirconia, or doped ceria.

13. System in accordance with any of claims 9 to 12, wherein the electrochemical cell is provided in the form of a honeycomb, so that multiple cells are present.

14. System in accordance with any of claims 9 to 13, wherein the purification comprises the oxidation of nitrogen monoxide to nitrogen dioxide by the porous ceramic anode layer, and the subsequent reduction of nitrogen dioxide to nitrogen by the porous ceramic cathode layer.

15. Use of the system of any one of claims 9 to 14 as exhaust gas purification system, for example in an automotive engine, a ship engine in a purification system for industrial exhaustive gases or as exhaust gas purification system for private household heating systems, preferably diesel engines.
